# EUROPEAN PATENT APPLICATION

(11) **EP 1 086 779 A1**
(43) Date of publication of application: **28.03.2001**
(21) Application number: 00203276.1
(22) Date of filing: 22.09.2000
(51) Int. Cl.: B23K 37/06

(54) **Welding pool support**

(30) Priority: 22.09.1999 NL 1013115
(71) Applicant: VERMAAT TECHNICS B.V., 3235 XK Rockanje (NL)
(72) Inventor: Vermaat, Huibrecht Pieter, 3235 XK Rockanje (NL)
(74) Representative: Ferguson, Alexander

(57) **Abstract**

Device for supporting a welding pool at the location of a welded joint between two steel pipes which is to be made from the outside, comprising a frame to be positioned within the pipes and a number of welding pool shoes, which are themselves supported on the frame by means of holder means, which can be moved by operation means between a radially retracted resting position and a radially extended active position, in which the welding pool shoes with each other form a in circumferential direction substantially continuous floor for the welding pool, in which the operation means comprise a source for fluid under pressure and the holder means comprise chambers that can be pressurised with the fluid by the operation means, and in which the chambers have deformable walls.

## Description

The invention relates to a support for a welding pool during welding two tubes or pipes placed together to each other.

When welding two pipes to each other in order to form a pipeline for for instance gas or oil, the end edges of the pipes are brought together, in which the end edges are kept in line at a little distance from each other by means of positioning means, in particular a so-called "line-up clamp". Said line-up clamp can be positioned in the pipes and is provided with two series of pressure segments to be positioned on either side of the joint, which segments can be biassed against the inner wall of the pipes. After the pipes have been set the weld is made with the help of an auto-welder moving over the outer circumference. In order to prevent that the welding material seeps through the slit into the pipes, use is made of welding pool supports which are to be arranged from the inside and which in the active position can form a continuous surface in circumferential direction.

From US patent specification 5.110.031 a line-up clamp including welding pool supports is known, in which the welding pool supports are arranged on hydraulic or pneumatic piston/cylinder assemblies, with which they can be moved from a radially retracted resting position into a radially extended active position. The actual welding pool supports, made of copper or ceramic material, are attached on carriers, which themselves are attached to the end of the piston rod in question by means of a cardan joint, for adjustment to possible irregularities in the pipe wall. The actual welding pool supports are parallelogram-shaped and, when retracting the piston rods, can rotate with respect to each other as a result of the placement of torsion springs between the piston rod of the one welding pool supports and the carrier of the adjacent welding pool support. As a result it is prevented that the welding pool supports would hinder each other because the circumferential length becomes smaller when retraction takes place.

From European patent application 0.767.719 another line-up clamp is known. Here the welding pool supports are attached to upright legs of U-shaped carriers by means of axial bolts, which carriers themselves are mounted in U-shaped saddles in a slidable manner in axial direction. Springs are present between the U-shaped carriers and the walls of the saddles. Thus the U-shaped holders can move axially to some extent when radially retracting the welding pool supports in order to compensate a smaller circumferential length in that way.

At their radial inside, the saddles themselves are each provided with a rod, which is snugly accommodated in a tube in the frame of the line-up clamp. On the bottom of the tube a radial compression spring is present, which engages the lower end of the rod. The compression spring exerts a permanent radial outward force on the saddle and thus on the welding pool support. For keeping the welding pool support in the retracted position, the adjacent pressure segments are provided with a stop extending in the radial path of the carrier. When the pressure segments are extended the welding pool support therefore moves along of its own accord.

It is an object of the invention to provide a device for supporting a welding pool at the location of the transition between two pipes, which as to construction is simple and with which a tight abutment of the welding pool supports against the inner surface of the pipes, also in case of irregularities, is possible.

To that end the invention provides a device for supporting a welding pool at the location of a welded joint between two steel pipes which is to be made from the outside, comprising a frame to be positioned within the pipes and a number of welding pool shoes, which are themselves supported on the frame by means of holder means, which can be moved by operation means between a radially retracted resting position and a radially extended active position, in which the welding pool shoes with each other form a in circumferential direction substantially continuous floor for the welding pool, in which the operation means comprise a source for fluid under pressure and the holder means comprise chambers that can be pressurised with the fluid by the operation means, and in which the chambers have deformable walls.

Because the deformability is combined with the chambers of the holder means the construction can remain simple. Additional means that need a lot of servicing, such as a cardan joint, can be dispensed with.

Preferably the side walls of the chambers are deformable in radial direction, for an improved adjustment to radial irregularities on the inner surface of the pipes.

Preferably the side walls of the chambers are deformable in axial direction of the pipes, in order to thus, without special interventions, also provide a possibility of movement for the welding pool shoes in axial direction during retracting the welding pool shoes. The welding pool shoes can then tilt away from the plane of the weld, as a result of which room is made more quickly in circumferential direction.

A very simple embodiment of the device according to the invention is obtained when the use is made of chambers having bellow-shaped side walls.

Preferably the chambers are provided with a rigid support plate at their radial outer side, on which support plate a welding pool shoe has been attached. The rigid support plate may be detachably attached to a rigid end member on the chamber in question.

According to an advantageous further development of the device according to the invention the rigid support plate is then attached to said rigid end member on the chamber in question by means of bolts that substantially extend in radial direction and are situated adjacent to the welding pool shoe. In this way it is achieved that the welding pool shoe can be detached for replacement with radially extending tools, for which a narrow slit between the welding pool shoe and adjacent pressure segment can suffice. In comparison to the arrangement according to EP-A-0.767.719, in which the welding pool shoes have to be detached by means of axially extending tools, the pressure segments can be placed much closer to the welding pool shoes, which benefits the aligning.

Preferably the welding pool shoe is detachably attached with its lower surface to the rigid support plate. After removal of the welding pool shoe with support plate, both can be replaced or replacement can be limited to the shoe itself.

From another aspect the invention provides an assembly comprising a device according to the invention as well as positioning means having retaining means for engaging the inner surface of both pipes in order to keep the pipes in line and at the correct mutual distance with respect to each other, in which the rigid support plate is situated within the axial space between the retaining means.

Preferably the positioning means are provided with directing means for the support plate or the welding pool shoe.

From yet another aspect the invention provides an assembly for welding two steel pipes to each other, comprising positioning means for keeping the end edges of both pipes to be welded to each other at the correct location with respect to each other, as well as a device for supporting a welding pool at the location of a welded joint between two steel pipes which is to be made from the outside, comprising a frame to be positioned within the pipes and a number of welding pool shoes, which are themselyes supported on the frame by means of holder means, which can be moved by operation means between a radially retracted resting position and a radially extended active position, in which the welding pool shoes with each other form a in circumferential direction substantially continuous floor for the welding pool, in which the welding pool shoes are attached on the holder means by means of connection means that can be detached from the outside, which means extend substantially radially.

Preferably the positioning means comprise retaining means for engaging the inner surface of both pipes, in which the rigid support plate is situated within the axial space between the retaining means.

The invention will now be elucidated in the basis of the preferred embodiment shown in a schematic manner in the accompanying figures, in which:
Figure 1 shows a schematic arrangement in part of a welding pool support and a line-up clamp prior to placing the welding pool support; and
Figure 2 shows the arrangement of figure 1, however now during making a weld.

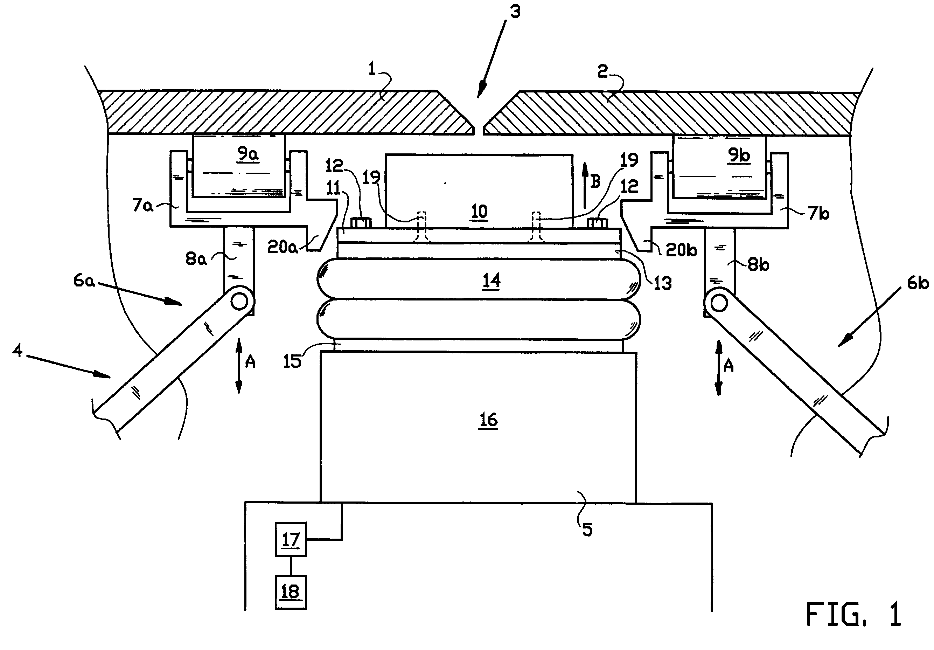

In figure 1 two pipes 1 and 2 to be connected to each other are shown, which with their inclined end edges are kept at a little distance from each other in order to define a welding joint 3 to be filled with welding material. For aligning the pipes 1 and 2 and keeping them at the correct distance from each other, a so-called line-up clamp 4 is used, which is indicated here by clamping mechanisms 6a, 6b, which with the help of means that are not further shown here can be extended and retracted in the directions A, when such is desired. During clamping or retaining the pipes 1 and 2 the pressure segments 9a and 9b press against the inner surface of the pipes 1 and 2, and namely at regularly spaced locations along the circumference. For a broader elucidation on that subject, both aforementioned patent specifications are referred to.

The push segments 9a and 9b are carried in U-shaped saddles 7a, 7b at the lower ends of which rods 8a, 8b extend to a hingeable connection with the frame of the line-up clamp.

On their sides facing each other, the saddles 7a, 7b are provided with directing protrusions 20a, 20b provided with inclined sides, which are here shown as exaggeratingly large.

Between both parts of the line-up clamp a device 5 is present with the help of which welding pool supports for welding spaces 3 are provided, which device 5 can be independent from the line-up clamp, but, if so desired, can also be a part of it. The welding pool support device 5 comprises a series of welding pool shoes 10 at the radial outer end, which are made of ceramic material or copper, or another suitable material. Said shoes 10 in top view may be trapezium-shaped, as is shown for instance in European patent application 0.767.719 in which in circumferential direction adjacent shoes also have an alternating trapezium shape. By means of bolts 19 each shoe 10 is attached at its bottom side to a steel support plate 11, which with the help of bolts 12 is fixed to a steel ring 13. As a result the assembly of shoe 10 with support plate 11, after the assembly of line-up clamp with welding pool support device has been guided out of the pipeline, can simply be detached with the help of radially extending tools. The pressure segments 9a, 9b can as a result in fact be placed very near the edge of the support plate 11, in which it should be noted that in figure 1 the mutual distance is shown as exaggeratingly large.

Furthermore it is special that the welding pool shoe 10 is supported on a bellows construction 14, of which the upper end is attached to the support plate 11 of the shoe 10 by means of said ring 13 and the lower end is attached to the frame 16 of the welding pool support device 5 by means of ring 15. With its inside, the bellows 14 defines a chamber which is in fluid connection with a pressure source 17 for oil or air, which is controlled with the help of an operable control device 18. The pressure can be varied as desired for reaching an optimal abutment of the shoe 10 against the inner surface of the pipes 1 and 2.

When the welding pool shoe 10 has to be brought into abutment with the inner surface of the pipes 1 and 2 the pressure source 17 is activated, so that the inside of the bellows 14 is pressurized and the bellows 14 expand, and the shoe 10 moves in the direction B. Here the bellows can be pressurized to 8-12 bar, which is possible with bellows that are available on the market and are presently used for other purposes, such as the "Firestone Airstroke ® Actuators". Such bellows constructions have proven to be able to work reliably with high pressures over a long period.

When the welding pool shoe is confronted with an irregularity on the inner surface of one of the pipes 1 or 2, the side wall of the bellows 14 offers sufficient compensation, so that the shoe 10 is able to abut the inner surface as well as can be and a leakage path under the welding space 3 is prevented.

When moving the welding shoe 10 in the direction B, the inclined sides of the directing protrusions 20a, 20b by contact with the edges of the support plate 11, ensure that the welding shoe 10 is guided/kept confined in axial direction in a secure manner until abutment against the inner surface of the pipes 1, 2 at the wanted location.

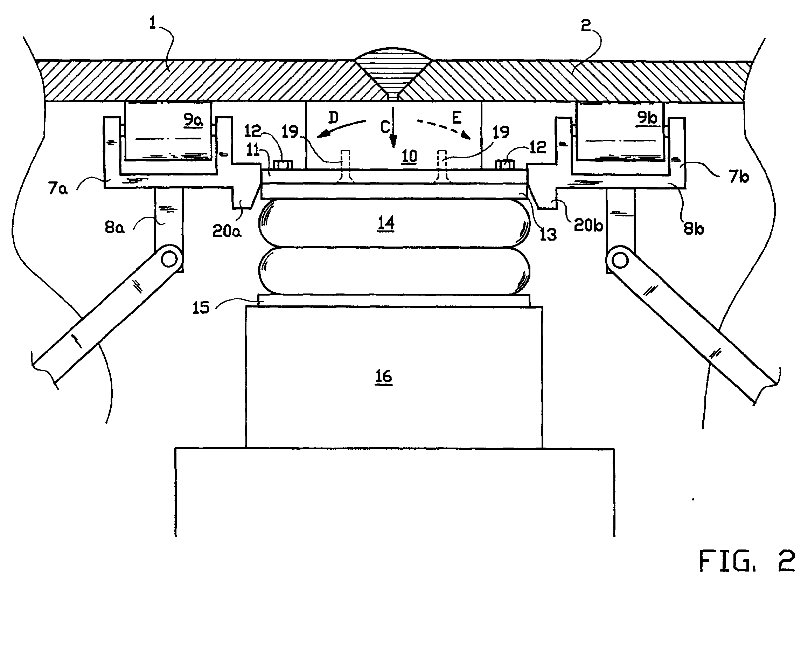

After completing the weld, as indicated in figure 2, the pressure from the pressure source 17 can be released, and the shoe 10 can be retracted again in the direction C. The aforementioned problem of the circumferential length becoming smaller occurs here, which problem in this case is solved because in circumferential direction adjacent shoes are able to alternatingly tilt away in direction D and direction E, in the direction of their largest trapezium side, both in axial and in radial direction. Because of the tilting the need to move in axial direction is reduced.

## Claims

1. Device for supporting a welding pool at the location of a welded joint between two steel pipes which is to be made from the outside, comprising a frame to be positioned within the pipes and a number of welding pool shoes, which are themselves supported on the frame by means of holder means, which can be moved by operation means between a radially retracted resting position and a radially extended active position, in which the welding pool shoes with each other form a in circumferential direction substantially continuous floor for the welding pool, in which the operation means comprise a source for fluid under pressure and the holder means comprise chambers that can be pressurised with the fluid by the operation means, and in which the chambers have deformable walls.

2. Device according to claim 1, in which the side walls of the chambers are deformable in radial direction.

3. Device according to claim 1 or 2, in which the side walls of the chambers are deformable in axial direction of the pipes.

4. Device according to claim 1, 2 or 3, in which the chambers have bellow-shaped side walls.

5. Device according to any one of the preceding claims, in which the chambers at their radial outer side are provided with a rigid support plate, on which a welding pool shoe has been attached.

6. Device according to claim 5, in which the rigid support plate is detachably attached to a rigid end member on the chamber in question.

7. Device according to claim 6, in which the rigid support plate is attached to said rigid end member on the chamber in question by means of bolts that substantially extend in radial direction and are situated adjacent to the welding pool shoe.

8. Device according to claim 6 or 7, in which the welding pool shoe is detachably attached with its lower surface to the rigid support plate.

9. Assembly comprising a device according to claim 7, further comprising positioning means having retaining means for engaging the inner surface of both pipes in order to keep the pipes in line and at the correct mutual distance with respect to each other, in which the rigid support plate is situated within the axial space between the retaining means.

10. Assembly according to claim 9, in which the positioning means are provided with orienting means for the support plate or the welding pool shoe.

11. Assembly for welding two steel pipes to each other, comprising positioning means for keeping the end edges of both pipes to be welded to each other at the correct location with respect to each other, as well as a device for supporting a welding pool at the location of a welded joint between two steel pipes which is to be made from the outside, comprising a frame to be positioned within the pipes and a number of welding pool shoes, which are themselves supported on the frame by means of holder means, which can be moved by operation means between a radially retracted resting position and a radially extended active position, in which the welding pool shoes with each other form a in circumferential direction substantially continuous floor for the welding pool, in which the welding pool shoes are attached on the holder means by means of connection means that can be detached from the outside, which means extend substantially radially.

12. Assembly according to claim 10, in which the positioning means comprise retaining means for engaging the inner surface of both pipes, in which the rigid support plate is situated within the axial space between the retaining means.

13. Device for supporting a welding pool at the location of a welded joint between two steel pipes to be made on the outside, comprising one or several of the characterizing measures described in the accompanying description and/or shown in the accompanying drawings.
